(19) Europäisches Patentamt
European Patent Office
Office européen des brevets

(11) Numéro de publication: 0 158 555 B1

(12) **FASCICULE DE BREVET EUROPEEN**

(45) Date de publication du fascicule du brevet: **08.02.89**

(51) Int. Cl.[4]: **G 21 F 9/00**

(21) Numéro de dépôt: **85400561.8**

(22) Date de dépôt: **22.03.85**

(54) **Procédé pour récupérer le plutonium contenu dans des déchets solides.**

(30) Priorité: **27.03.84 FR 8404764**

(43) Date de publication de la demande: **16.10.85 Bulletin 85/42**

(45) Mention de la délivrance du brevet: **08.02.89 Bulletin 89/6**

(84) Etats contractants désignés: **BE DE GB**

(56) Documents cités:
**DE-A- 2 619 089**
**GB-A- 847 641**
**US-A- 3 669 631**

(73) Titulaire: **COMMISSARIAT A L'ENERGIE ATOMIQUE, 31/33, rue de la Fédération, F-75015 Paris (FR)**

(72) Inventeur: **Koehly, Gérard, 17, Allée des Primevères, F-91570 Bievres (FR)**
Inventeur: **Bourges, Jacques, 10, rue de Perthuis, F-91370 Verrieres le Buisson (FR)**
Inventeur: **Madic, Charles, 5, Place du Marché, F-94320 Thiais (FR)**
Inventeur: **Lecomte, Michael, Montée des Chèvres, F-91190 Gif-Sur-Yvette (FR)**

(74) Mandataire: **Mongrédien, André et al, c/o BREVATOME 25, rue de Ponthieu, F-75008 Paris (FR)**

EP 0 158 555 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un procédé pour récupérer le plutonium contenu dans des déchets solides tels que des déchets de procédé, des déchets technologiques et des déchets de laboratoires.

On sait que l'un des problèmes rencontrés fréquemment dans les installations nucléaires est de récupérer le plutonium et/ou le neptunium présente dans des déchets solides provenant, soit de la fabrication des éléments combustibles nucléaires, soit du traitement des combustibles nucléaires irradiés. Ces déchets peuvent être constitués par des cendres provenant de l'incinération à 800–900 °C de déchets combustibles fortement contaminés en plutonium, ce qui conduit à l'obtention de cendres calcinées dans lesquelles le plutonium se trouve sous forme d'oxyde ou d'autres composés réfractaires, donc sous une forme difficile à récupérer en solution. On obtient également des déchets solides contenant du plutonium sous la forme d'oxyde lors du dégainage des éléments combustibles nucléaires irradiés car une quantité non négligeable d'oxyde de plutonium reste fixée sur les tronçons des gaines de combustible. Enfin, certains déchets de laboratoires, notamment des déchets à base de matières plastiques peuvent également être contaminés par de l'oxyde de plutonium qu'il est difficile de récupérer par dissolution.

Jusqu'à présent la méthode la plus utilisée pour dissoudre l'oxyde de plutonium contenu dans des déchets tels que les cendres d'inclinération de déchets combustibles, était basée sur l'effet catalytique des ions fluorure qui permet de dissoudre le plutonium en solution nitrofluorhydrique. En effet, dans ces déchets, l'impureté principale la plus gênante est la silice qu'il convient d'éliminer dès le début du traitement. Dans ce but, on traite les cendres à froid pendant 24 h dans de l'acide fluorhydrique 10N pour solubiliser au maximum la silice, puis on attaque le résidu par un mélange d'acide nitrique 6M et d'acide fluorhydrique 2N, à l'ébullition, pour chasser les dernières traces de silice sous forme de $SiF_6H_2$ qui distille, et on solubilise enfin le fluorure de plutonium par un mélange d'acide nitrique 4M et de nitrate d'aluminium 1 M à l'ébullition.

Ainsi, cette méthode nécessite l'emploi de réactifs très corrosifs et elle conduit à la production d'effluents fortement fluorés dont le traitement pose des problèmes.

On a également envisagé de récupérer le plutonium contenu dans les déchets par aluminothermie, c'est-à-dire en réduisant l'oxyde de plutonium par l'aluminium, ce qui conduit à un alliage PuAl qui peut être dissous ensuite en milieu $HNO_3$–HF. Cependant, cette méthode ne donne pas de bons résultats car le taux de récupération du plutonium ou de l'uranium contenu dans les cendres ne dépasse par 50%. On peut aussi récupérer le plutonium par fusion alcaline dans un bain de $Na_2O_2$ et de NaOH. Après fusion, la masse vitreuse contenant le plutonium est imergée dans l'eau que l'on acidifie avec un excès d'acide nitrique pour récupérer le plutonium dans la solution. Cependant, la solution obtenue n'est pas stable et au bout d'un certain temps, un précipité blanc floconneux de $SiO_2$ se forme dans la solution et entraîne partiellement le plutonium.

On peut encore envisager de convertier l'oxyde de plutonium contenu dans les cendres en hexafluorure de plutonium, par réaction avec du fluor gazeux, mais dans ce cas, étant donné la grande réactivité des cendres, celles-ci ont tendance à se prendre en masse et on ne peut obtenir un taux de récupération satisfaisant du plutonium.

Ainsi, aucun des procédés connus actuellement ne permet de récupérer le plutonium des déchets dans des conditions satisfaisantes.

On connaît aussi par le brevet allemand DE-A-2 619 089 un procédé de dissolution d'oxyde de plutonium catalysé par des ions fluorure dans lequel on utilise une solution nitrique contenant une quantité catalytiquement efficace de fluorure, et on ajoute à cette solution $Ag_2O_2$ pour oxyder les ions Pu dissous et augmenter la vitesse de dissolution.

On sait aussi par le brevet anglais GB-A-847 641 que l'on peut oxyder du plutonium en solution auquese par un composé d'argent tel que $Ag_2O_2$.

Cependant, le procédé de dissolution du brevet DE-A-2 619 089 a l'inconvénient de nécessiter la présence d'ions fluorures et des durées de traitement relativement longues.

La présente invention a précisément pour objet un procédé de récupération du plutonium contenu dans des déchets solides, qui permet d'obtenir des taux de récupération supérieurs à 95%, sans nécessiter l'utilisation de solutions fortement corrosives.

Le procédé, selon l'invention, de récupération du plutonium contenu dans des déchets solides consiste à mettre en contact les déchets solides avec une solution aqueuse d'acide nitrique ayant une concentration en acide nitrique de 2 à 8 $mol.1^{-1}$ et contenant un composé de $Ag^{2+}$ soluble dans la solution, pendant une durée suffisante pour oxyder au moyen des ions $Ag^{2+}$ le plutonium présent dans les déchets, la solution étant dépourvue d'ions fluorures capables de catalyser la dissolution nitrique du plutonium présent dans les déchets.

En effet, les ions $Ag^{2+}$ sont des agents oxydants qui sont capables d'oxyder de nombreux éléments et de les faire passer en solution. Dans le cas du plutonium sous la forme d'oxyde, l'oxydation par $Ag^{2+}$ correspond aux schémas réactionnels suivants:

$$Ag^{2+} + PuO_{2(S)} \rightarrow PuO_2^{+} + Ag^{+} \quad (1)$$

$$Ag^{2+} + PuO_2^{+} \rightarrow PuO_2^{2+} + Ag^{+} \quad (2)$$

Les réactions (1) et (2) ont une cinétique très élevée, ce qui conduit à une dissolution pratiquement instantanée du plutonium.

Généralement, on réalise cette mise en contact

sous agitation pour favoriser les contacts entre les ions $Ag^{2+}$ et le plutonium présent dans les déchets.

Selon un mode préféré de mise en œuvre du procédé de l'invention, on réalise cette mise en contact dans une cellule d'électrolyse comportant une anode et une cathode, on soumet la solution à une agitation et on applique entre l'anode et la cathode une différence de potentiel suffisante pour régénérer continuellement les ions $Ag^{2+}$ qui ont été utilisés pour oxyder les éléments oxydables présents dans les déchets.

Ainsi, on régénère en continu, par électrolyse, les ions $Ag^{2+}$ consommés pour oxyder le plutonium et d'autres éléments oxydables, selon le schéma réactionnel suivant:

$$2Ag^{+} + 2e \rightarrow 2Ag^{2+} \qquad (3)$$

Cette réaction (3) de régénération des ions $Ag^{2+}$ a lieu sur l'anode de la cellule et pour obtenir une vitesse maximale de dissolution du plutonium, on facilite celle-ci en soumettant la solution à une agitation afin de limiter la couche de diffusion au niveau de l'anode et d'augmenter les contacts des ions $Ag^{+}$ avec l'anode.

Le procédé de l'invention se révèle très avantageux par rapport aux procédés de l'art antérieur. En effet, il permet de s'affranchir totalement de la présence d'ions fluorure, de travailler uniquement en milieu nitrique et à la température ambiante, ce qui autorise l'emploi d'appareillages en acier inoxydable. Par ailleurs, il permet d'obtenir la dissolution du plutonium avec un rendement élevé, de l'ordre de 98 ± 2%, en utilisant des durées de traitement relativement faibles, de l'ordre de 1 à 6 h.

Lorsque les déchets solides à trater contiennent des chlorures, on soumet tout d'abord les déchets solides à un traitement d'élimination de ces chlorures, avant de les mettre en contact avec la solution aqueuse d'acide nitrique.

En effet, il est important dans le procédé de l'invention de ne pas avoir d'ions chlorure en solution car ceux-ci entraîneraient la précipitation des ions $Ag^{+}$ et réduiraient d'autant la concentration en argent de la solution et la vitesse de dissolution du plutonium.

Avantageusement, l'élimination des chlorures est effectuée par lavage à l'eau des déchets solides, ce qui permet d'éliminer 90% des chlorures sans perte notable en plutonium (environ 0,02%). Généralement, on réalise trois lavages à l'eau des déchets en utilisant une proportion d'environ 25 ml d'eau par gramme de déchets.

Pour la mise en œuvre du procédé de l'invention, la concentration en acide nitrique de la solution aqueuse est de préférence de 4 à 6 mol.$1^{-1}$ car la solubilité de l'argent (II) augmente avec la concentration en acide nitrique. Généralement le compose d'argent (II) est de l'oxyde d'argent AgO.

On opère, de préférence, à une température de 20 à 40 °C afin d'obtenir une vitesse de dissolution satisfaisante tout en conservant une stabilité suffisante des ions $Ag^{2+}$ vis-à-vis de la réaction parasite d'oxydation de l'eau par les ions $Ag^{2+}$ dont la vitesse augmente avec la température.

En ce qui concerne la concentration en argent, on peut utiliser des concentrations qui varient dans une large gamme; cette concentration est choisie notamment en fonction de la vitesse de dissolution que l'on veut atteindre, car cette dernière augmente avec la teneur en argent de la solution aqueuse.

Généralement, on utilise des concentrations en argent allant de $10^{-2}$ à $10^{-1}$ mol.$1^{-1}$. Par ailleurs, pour favoriser la régénération des ions $Ag^{2+}$ en solution, on utilise de préférence une anode de surface relativement importante par rapport au volume de solution à traiter.

L'agitation de la solution constitue également un élément important pour augmenter la vitesse de dissolution car elle permet de mutliplier les contacts d'une part entre les ions $Ag^{+}$ et l'anode, et, d'autre part, entre les ions $Ag^{2+}$ et les déchets solides à traiter. L'agitation peut être réalisée par voie magnétique, mécanique et/ou ultrasonique. Toutefois, une agitation simultanée par voie mécanique et par voie ultrasonique s'est avérée être plus efficace que la seule agitation par voie mécanique.

Dans le procédé de l'invention, les phénomènes qui limitent vraisemblablement la vitesse de dissolution du plutonium présent dans les déchets sont liés, d'une part à la régénération des ions $Ag^{2+}$, et d'autre part, à la vitesse de diffusion de ces ions $Ag^{2+}$ au sein des déchets solides pour atteindre le plutonium à dissoudre.

Afin de favoriser les contacts entre les ions $Ag^{2+}$ et le plutonium présent dans les déchets, il est nécessaire de procéder à un brassage énergique de la solution. Par ailleurs, le rapport entre le volume de la solution et la masse des déchets traités joue également un rôle important. Généralement, on utilise un rapport volume de solutions/masse des déchets relativement élevé, de l'ordre de 10 à 20 ml de solution par gramme de déchets. Enfin, la granulométrie des déchets traités exerce également une influence sur la vitesse de dissolution. Dans le cas de cendres, on utilise avantageusement une granulométrie inférieure à 1 mm.

Afin d'augmenter la vitesse de régénération des ions $Ag^{2+}$, on utilise une anode ayant une surface relativement importante pour favoriser les contacts entre les ions $Ag^{+}$ et l'anode, et on choisit une densité de courant anodique appropriée car la vitesse de dissolution augmente avec cette densité de courant. Généralement, on utilise une densité de courant anodique toujours supérieure à 1 mA·$cm^{-2}$ de surface de l'anode.

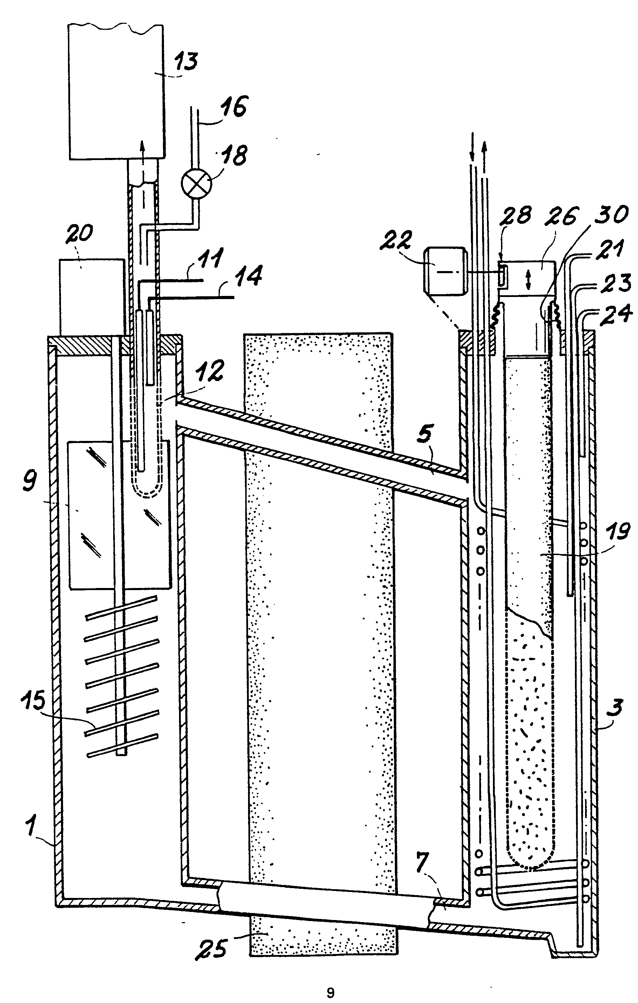

D'autres caractéristiques et avantages de l'invention apparaîtront mieux à la lecture des exemples suivants donnés bien entendu à titre illustratif et non limitatif en référence au dessin annexé qui représente schématiquement en coupe verticale un dispositif de dissolution pour mettre en œuvre le procédé de l'invention.

Sur cette figure, on voit que le dispositif de dissolution comprend un premier tube 1 et un second tube 3 de diamètre identique reliés par des

conduites 5 et 7 disposées de façon à permettre la circulation (suivant le trajet des flèches) du mélange de déchets et de solution du second tube 3 au premier tube 1 par la conduite 5 en déversoir et du premier tube 1 au second tube 3 par la conduite 7. Les deux tubes 1 et 3 ont une géométrie sûre et ils peuvent par exemple présenter les dimensions suivantes: un diamètre de 16 cm et une hauteur totale de 1 m, ce qui correspond à une capacité utile de 20 l. Les tubes 1 et 3 peuvent être réalisés en plexiglass, en tantale ou en verre.

Le premier tube 1 comporte les moyens voulus pour assurer l'électrolyse, l'agitation du mélange et le piègeage des gaz produits lors de l'électrolyse. Ainsi, le premier tube 1 comprend une anode 9 qui est de préférence de forme cylindrique afin de présenter une surface importante, et une cathode 11 disposée dans un compartiment cathodique 12 délimité en partie par une paroi poreuse en matériau isolant électrique et relié à une colonne de lavage des gaz 13. Ainsi les produits gazeux formés sur la cathode (produits nitreux et hydrogène) sont captés et entraînés après dilution dans l'air au travers d'une colonne de lavage ayant comme fonction la rétention des produits azotés, l'hydrogène étant évacué par la ventilation de l'enceinte de confinement dans laquelle est disposé le dispositif.

Le comportiment cathodique qui peut avoir par exemple un diamètre de 5 cm et un volume d'environ 0,5 l, est muni de plus d'un détecteur de niveau 14 et d'une conduite 16 d'introduction d'un électrolyte dans le compartiment cathodique 12. La conduite 16 comporte une vanne 18 asservie au moyen de détection 14 du niveau dans le compartiment afin de commander l'ouverture de la vanne 18 lorsque le niveau est situé en-dessous de la valeur voulue et de fermer au contraire la vanne 18 lorsque le niveau de liquide a atteint la valeur voulue. Par ailleurs, on note que le compartiment cathodique est disposé en face de la conduite 5, ce qui permet de faciliter l'évacuation des calories dégagées dans ce compartiment, par le flux de mélange entrant dans la conduite 5. Une turbine 15 qui peut être entraînée par un moteur électrique 20 permet d'assurer le brassage et la circulation du mélange solide-liquide entre les tubes 1 et 3.

Le second tube 3 est muni de moyens pour retenir les déchets solides et de moyens pour assurer le refroidissement du mélange.

Les moyens permettant de retenir les déchets solides sont constitués par un panier filtrant 19 et les moyens de refroidissement sont constitués par un serpentin 17 entourant le panier 19 et parcouru par un liquide réfrigérant. Le panier 19 peut être animé d'un mouvement de va et vient dans le sens vertical, sous l'action du moteur 22 dont l'arbre est relié à l'obturateur 26 du panier par un excentrique 28. L'étanchéité est assurée par un soufflet 30.

Une conduite 23 qui débouche à la partie inférieure du second tube 3 permet d'assurer le soutirage de la solution obtenue et ce second tube 3 est muni également d'une conduite 24 d'introduction des réactifs, soit de l'oxyde d'argent ou de l'acide nitrique.

Le second tube 3 est également muni de moyens 21 pour détecter la fin de la réaction et ces moyens sont avantageusement constitués par une sonde de mesure de la densité du liquide ou une sonde de mesure de la concentration en argent de la solution.

Pour améliorer la sûreté, le dispositif comprend de plus un écran 25 en matériau neutrophage par exemple en plâtre ou polyéthylène boré disposé entre les deux tubes 1 et 3.

La trémie 19 est avantageusement une trémie vibrante permettant de répartir l'alimentation en déchets sur une durée comprise entre 1/3 et 2/3 de la durée totale de dissolution.

Les moyens 21 pour détecter la fin de la réaction peuvent être constitués par une sonde optique capable de repérer la coloration de l'argent II, ce qui indique que les ions argent ne sont plus utilisés pour oxyder le plutonium ou d'autres éléments présents dans les déchets. On peut aussi utiliser une sonde de mesure de la densité du liquide car la fin de la réaction peut être repérée par l'obtention d'une densité stable. On peut encore utiliser une sonde de mesure du dégagement gazeux sur l'anode.

Les moyens 23 de soutirage de la solution comportent une conduite de vidange qui débouche à l'extrémité inférieure du second tube.

La turbine 15 présente dans le premier tube 1 peut être remplacée par une pompe ou tout moyen approprié permettant d'assurer une agitation énergique dans le premier tube et de mettre en circulation le mélange du premier tube au second tube dans le sens indiqué par les flèches.

La paroi poreuse de séparation du compartiment cathodique 12 peut être réalisée en verre fritté, ou en céramique frittée, par exemple en alumine frittée.

Généralement, la solution utilisée dans le compartiment cathodique 12 est une solution d'acide nitrique 8N.

Les exemples suivants sont donnés à titre non limitatif pour illustrer l'invention.

Exemple 1

Cet exemple illustre la dissolution du plutonium contenu dans des cendres d'incinération comprenant environ 30 mg de Pu, 100 mg de chlorure, 125 mg de phosphore et 268 mg de silice par gramme de cendres, ces cendres contenant également d'autres éléments solubilisables tels que Zn, Pb, Al, Sn, Fe, Ni, Cr, Co, B et Mo.

Dans cet exemple, on utilise une cellule électrolytique en verre maintenue à 25 °C et séparée en deux compartiments par une paroi en verre fritté ayant une porosité de 3. Le compartiment cathodique contient de l'acide nitrique 8N et la cathode est un fil de platine. Le compartiment anodique contient la solution aqueuse nitrique et l'anode réalisée en platine a la forme d'un cylindre d'environ 30 $m^2$. L'agitation est réalisée au moyen d'un agitateur à hélice hélicoïdale en téflon, tournant à

1200 t·min$^{-1}$, disposé dans le compartiment anodique.

Tout d'abord, on traite les cendres d'incinération pour les débarrasser les chlorures qu'elles contiennent par lavage à l'eau. On les introduit ensuite dans le compartiment anodique de la cellule d'électrolyse qui contient 100 ml d'anolyte constitué par une solution aqueuse ayant une concentration en acide nitrique de 4 mol.1$^{-1}$ et une concentration en argent de $5 \cdot 10^{-2}$ mol.1$^{-1}$. On traite ainsi 5 g de cendres en 1h30 min., en utilisant une densité de courant de 16 mA.cm$^{-2}$. On peut traiter 10 g de cendres en 3 h, en utilisant une densité de courant de 26 mA.cm$^{-2}$.

Dans les deux cas, le rendement de dissolution du plutonium est supérieur à 98%.

A la suite de ce traitement, on sépare le résidu de la solution par filtration sur un fritté de porosité 4, et on lave ce résidu plusieurs fois par de l'acide nitrique 4N afin de désorber la fraction de solution retenue dans le résidu. On ajoute l'acide de lavage à la solution obtenue lors du traitement de dissolution. On peut ensuite séparer le plutonium de cette solution par extraction liquide-liquide au moyen de phosphate de tributyle.

Exemple 2

Dans cet exemple, on utilise le dispositif de la figure annexée pour traiter 1 kg de cendres analogues à celles de l'exemple 1, dans les conditions suivantes:

- acidité nitrique: 4 mol.1$^{-1}$,
- intensité du courant: 40 A,
- surface de l'anode: 1000 cm$^2$,
- concentration en argent: $5 \cdot 10^{-2}$ mol.1$^{-1}$,
- volume de l'anolyte: 20 l.

Après deux heures de traitement, on obtient un rendement de dissolution du plutonium de 98%.

Exemple 3

Cet exemple illustre le traitement d'un kilo de coques provenant du traitement d'éléments combustibles de réacteurs à eau afin de récupérer le plutonium qu'elles contiennent. Tout d'abord, on lave les coques à l'acide nitrique 4N afin de désorber le plutonium qui a été fixé dans la couche externe d'oxyde de zirconium lors du séjour des coques dans la solution de dissolution des combustibles. On élimine ainsi 6,13 mCi d'émetteur alpha par kg de coques. On prépare ensuite 2 l de solution aqueuse ayant une concentration en acide nitrique de 4 mol.1$^{-1}$ et on y ajoute 25 g d'oxyde d'argent AgO. On ajoute alors les coques aux 2 l de solution et après agitation, on prélève et on analyse la solution. On constate qu'elle contient 1,3 mCi de plutonium par kg de coques. On prélève ensuite 10 g de coques ainsi traitées, on les calcine, puis on les traite afin de mettre en solution la totalité du plutonium résiduel. On détermine alors la teneur en plutonium de la solution qui est de 0,64 mCi.kg$^{-1}$.

Ainsi, on observe que le traitement de l'invention permet d'obtenir un facteur de décontamination en plutonium de 3.

Exemple 4

On calcine à 900 °C, 10 g de coques de zircaloy contenant 2,2 mCi d'émetteurs alpha par kg de coques afin de transformer le zirconium en oxyde de zirconium $ZrO_2$. Après broyage, on traite l'oxyde de zirconium ainsi obtenu par une solution aqueuse contenant 4 mol.1$^{-1}$ d'acide nitrique et $5 \cdot 10^{-2}$ mol.1$^{-1}$ d'argent dans une cellule d'électrolyse, en utilisant une anode de 20 cm$^2$ et une intensité de courant de 0,5 A. On obtient ainsi en 4 h une décontamination satisfaisante. En effet, après cette électrolyse, l'activité résiduelle de l'oxyde de zirconium est seulement de 0,4 mCi.kg$^{-1}$. Ainsi, ces traitements ont permis d'éliminer une activité de 1,8 mCi.kg$^{-1}$ de coques.

Exemple 5

Cet exemple illustre la dissolution d'oxyde de plutonium polluant des déchets de laboratoire, constitués de chlorure de polyvinyle, de polyéthylène, de néoprène, de latex, de verre et de matières cellulosiques.

On traite tout d'abord les déchets dans une broyeur à couteaux afin de les fractionner jusqu'à l'obtention de déchets broyés de 10 à 20 mm$^2$ de surface. On introduit alors 2 kg de déchets broyés dans le panier filtrant 19 du dispositif représenté sur la figure annexée et on charge ce panier dans le second tube 3 du dispositif qui a été rempli au préalable d'une solution d'acide nitrique de 4 mol.1$^{-1}$ d'acide nitrique contenant $5 \cdot 10^{-2}$ mol.1$^{-1}$ d'argent. On met en marche le moteur 20 de l'agitateur 15 et le moteur 22 associé au panier 19 et on applique un courant d'électrolyse de 60 A que l'on maintient pendant 2 h après obtention d'une concentration stationnaire en $Ag^{2+}$.

En fin d'électrolyse, on soutire la solution par la conduite 23 et on laisse égoutter les déchets, puis on introduit dans le dispositif 20 litres d'une solution nitrique à 4 mol.1$^{-1}$ d'acide nitrique contenant $5 \cdot 10^{-2}$ mol.1$^{-1}$ d'argent $Ag^{2+}$ afin de bien rincer les déchets et de parfaire leur décontamination.

On extrait alors le panier 19 de l'appareil, on laisse égoutter les déchets broyés et on les sèche sous courant d'air chaud. On peut alors introduire une nouvelle charge de déchets dans le dispositif rempli de la solution qui a été utilisée pour le rinçage de la charge précédente.

Dans le cas de déchets dont le niveau de contamination initial est de 1,6 Ci/t, ce qui correspond à 54,4 mg de plutonium pour les 2 kg de déchets, on obtient en fin de traitement des déchets dont l'activité résiduelle correspond à 5% de l'activité initiale, soit 80 mCi/t, ce qui correspond à 160 µCi pour 2 kg de déchets. Le plutonium récupéré dans la solution représente 1,52 Ci/t, soit 3,4 mCi pour les 20 litres de solution de traitement.

## Revendications

1. Procédé pour récupérer le plutonium contenu dans des déchets solides, consistant à mettre en contact les déchets solides avec une solution aqueuse d'acide nitrique ayant une concentration

en acide nitrique de 2 à 8 mol.$1^{-1}$ et contenant un composé de $Ag^{2+}$ soluble dans la solution, pendant une durée suffisante pour oxyder au moyen des ions $Ag^{2+}$ l'oxyde de plutonium présent dans les déchets et le dissoudre dans la solution, la solution étant dépourvue d'ions fluorures capables de catalyser la dissolution nitrique du plutonium présent dans les déchets.

2. Procédé selon la revendication 1, caractérisé en ce que l'on réalise cette mise en contact dans une cellule d'électrolyse comportant une anode et une cathode, en ce que l'on soumet la solution à une agitation et en ce que l'on applique, entre l'anode et la cathode, une différence de potentiel suffisante pour régénérer continuellement les ions $Ag^{2+}$ qui ont été utilisés pour oxyder les éléments oxydables présents dans les déchets.

3. Procédé selon l'une quelconque des revendications 1 et 2 de traitement de déchets contenant des chlorures, caractérisé en ce que l'on soumet tout d'abord les déchets à un traitement d'élimination des chlorures et en ce qu'on les introduit ensuite dans la solution aqueuse d'acide nitrique.

4. Procédé selon la revendication 3, caractérisé en ce que le traitement d'élimination des chlorures est un lavage à l'eau.

5. Procédé selon l'une quelconque des revendications 1 à 3, caractérisé en ce que le composé de $Ag^{2+}$ est de l'oxyde d'argente AgO.

6. Procédé selon l'une quelconque des revendications 1 à 5, caractérisé en ce que la concentration en acide, nitrique de la solution aqueuse est de 4 à 6 mol.$1^{-1}$.

7. Procédé selon l'une quelconque des revendications 1 à 6, caractérisé en ce que l'on opère à une température de 20 à 40 °C.

8. Procédé selon l'une quelconque des revendications 1 à 4, caractérisé en ce que la concentration en argent de la solution aqueuse est de $10^{-2}$ à $10^{-1}$ mol.$1^{-1}$.

9. Procédé selon l'une quelconque des revendications 1 à 8, caractérisé en ce que l'on applique entre l'anode et la cathode de la cellule d'électrolyse une différence de potentiel telle que la densité de courant anodique soit toujours supérieure à 1 mA par $cm^2$ de surface de l'anode.

## Patentansprüche

1. Verfahren zum Zurückgewinnen von Plutonium aus festem Abfall, welches darin besteht, dass man den festen Abfall über eine zum Oxydieren von in dem Abfall enthaltenen Plutoniumoxid mittels der $Ag^{2+}$-Ionen und zum Lösen des Oxids in der Lösung ausreichende Zeitspanne mit einer wässrigen Lösung von Salpetersäure in Berührung bringt, welche eine Salpetersäurekonzentration von 2 bis 8 mol.$1^{-1}$ aufweist und eine in der Lösung lösliche $Ag^{2+}$-Verbindung enthält, wobei die Lösung keinerlei Fluoridionen enthält, welche in der Lage wären, die Auflösung des in dem Abfall enthaltenen Plutoniums in der Salpetersäure zu katalysieren.

2. Verfahren nach Anspruch 1, dadurch gekennzeichnet, dass man die Berührung in einer Elektrolysezelle herbeiführt, welche eine Anode und eine Kathode aufweist, dass man die Lösung in Bewegung versetzt und dass man zwischen der Anode und der Kathode eine Potentialdifferenz erzeugt, welche ausreicht, die zum Oxydieren der in dem Abfall vorhandenen oxydierbaren Elemente verbrauchten $Ag^{2+}$-Ionen fortlaufend zu regenerieren.

3. Verfahren nach einem der Ansprüche 1 und 2, für die Behandlung von chloridhaltigen Abfällen, dadurch gekennzeichnet, dass man die Abfälle zunächst einer Behandlung zum Entfernen der Chloride unterwirft und dass man sie anschliessend in die wässrige Salpetersäurelösung einträgt.

4. Verfahren nach Anspruch 3, dadurch gekennzeichnet, dass die Behandlung zum Entfernen der Chloride eine Waschung mit Wasser ist.

5. Verfahren nach einem der Ansprüche 1 bis 3, dadurch gekennzeichnet, dass die $Ag^{2+}$-Ionen in der Verbindung Silberoxid AgO vorliegen.

6. Verfahren nach einem der Ansprüche 1 bis 5, dadurch gekennzeichnet, dass die Konzentration der Salpetersäure in der wässrigen Lösung 4 bis 6 mol.$1^{-1}$ beträgt.

7. Verfahren nach einem der Ansprüche 1 bis 6, dadurch gekennzeichnet, dass man bei einer Temperatur von 20 bis 40 °C arbeitet.

8. Verfahren nach einem der Ansprüche 1 bis 4, dadurch gekennzeichnet, dass die Silberkonzentration der wässrigen Lösung $10^{-2}$ bis $10^{-1}$ mol.$1^{-1}$ beträgt.

9. Verfahren nach einem der Ansprüche 1 bis 8, dadurch gekennzeichnet, dass man zwischen der Anode und der Kathode der Elektrolysezelle eine derartige Potentialdifferenz erzeugt, dass die Dichte des Anodenstroms jederzeit grösser ist als 1 mA pro $cm^2$ der Anodenoberfläche.

## Claims

1. Process for the recovery of the plutonium contained in solid waste, comprising contacting the solid waste with an aqueous nitric acid solution having a nitric acid concentration of 2 to 8 mole.$1^{-1}$ and which contains a compound of $Ag^{2+}$ which is soluble in the solution, for a time adequate to oxidize by means of the $Ag^{2+}$ ions the plutonium oxide present in the waste and to dissolve same in the solution, the solution being free from fluoride ions able to catalyze the nitric dissolving of the plutonium present in the waste.

2. Process according to claim 1, characterized in that said contacting takes place in an electrolytic cell having an anode and a cathode, in that the solution is stirred and in that, between the anode and the cathode, is applied an adequate potential difference for the continuous regeneration of the $Ag^{2+}$ ions used for oxidizing the oxidizable elements present in the waste.

3. Process according to either of the claims 1 and 2, for the treatment of waste containing chlorides, characterized in that the waste firstly undergoes a treatment for eliminating chlorides and this is followed by the introduction thereof into the aqueous nitric acid solution.

4. Process according to claim 3, characterized

in that the chloride elimination treatment involves washing with water.

5. Process according to any one of the claims 1 to 3, characterized in that the $Ag^{2+}$ compound is silver oxide AgO.

6. Process according to any one of the claims 1 to 5, characterized in that the nitric acid concentration of the aqueous solution is 4 to 6 $mole.1^{-1}$.

7. Process according to any one of the claims 1 to 6, characterized in that working takes place at a temperature of 20 to 40 °C.

8. Process according to any one of the claims 1 to 4, characterized in that the silver concentration of the aqueous solution is $10^{-2}$ to $10^{-1}$ $mole.1^{-1}$.

9. Process according to any one of the claims 1 to 8, characterized in that a potential difference is applied between the anode and the cathode of the electrolytic cell such that the anode current density always exceeds 1 $mA/cm^2$ of the anode surface.

1/1